(19) **Europäisches Patentamt**

**European Patent Office**

**Office européen des brevets**

(11) **EP 1 276 981 B1**

(12) **EUROPÄISCHE PATENTSCHRIFT**

(45) Veröffentlichungstag und Bekanntmachung des Hinweises auf die Patenterteilung:
**10.05.2006   Patentblatt 2006/19**

(51) Int Cl.:
*F02D 41/24* *(2006.01)*     *F02D 35/02* *(2006.01)*
*F02P 5/152* *(2006.01)*     *F02P 5/15* *(2006.01)*

(21) Anmeldenummer: **01919207.9**

(22) Anmeldetag: **17.03.2001**

(86) Internationale Anmeldenummer:
**PCT/DE2001/001027**

(87) Internationale Veröffentlichungsnummer:
**WO 2001/079678 (25.10.2001 Gazette 2001/43)**

(54) **VERFAHREN ZUR ANPASSUNG EINES ADAPTIONSKENNFELDS EINER ADAPTIVEN BRENNKRAFTMASCHINEN-KLOPFREGELUNG UND VERFAHREN ZUR ADAPTIVEN KLOPFREGELUNG EINER BRENNKRAFTMASCHINE**

METHOD FOR ADJUSTING ADAPTIVE PROGRAMME MAPS OF AN ADAPTIVE KNOCK CONTROL IN AN INTERNAL COMBUSTION ENGINE AND A METHOD FOR ADJUSTING THE KNOCK CONTROL IN SAID ENGINE

PROCEDE D'AJUSTEMENT D'UN DIAGRAMME CARACTERISTIQUE D'ADAPTATION D'UN CONTROLE DU COGNEMENT ADAPTATIF D'UN MOTEUR A COMBUSTION INTERNE ET PROCEDE DE CONTROLE DU COGNEMENT ADAPTATIF D'UN MOTEUR A COMBUSTION INTERNE

(84) Benannte Vertragsstaaten:
**DE FR IT**

(30) Priorität: **19.04.2000   DE 10019400**

(43) Veröffentlichungstag der Anmeldung:
**22.01.2003   Patentblatt 2003/04**

(73) Patentinhaber: **ROBERT BOSCH GMBH**
**70442 Stuttgart (DE)**

(72) Erfinder:
• **UNLAND, Stefan**
  **71665 Vaihingen-Kleinglattbach (DE)**

• **HEINSTEIN, Axel**
  **71299 Wimsheim (DE)**
• **GUNDLACH, Michael**
  **71679 Asperg (DE)**
• **HAEMING, Werner**
  **74861 Neudenau (DE)**
• **LUDWIG, Martin**
  **71665 Vaihingen (DE)**

(56) Entgegenhaltungen:
**WO-A-97/30286          DE-A- 4 008 170**
**DE-A- 4 109 433          US-A- 4 594 983**

## Beschreibung

Stand der Technik

Die Erfindung geht aus von einem Verfahren zur Anpassung eines Adaptionskennfelds einer adaptiven Brennkraftmaschinen-Klopfregelung nach der Gattung des unabhängigen Anspruchs.

Es ist bereits ein Verfahren zur Anpassung eines Adaptionskennfelds einer adaptiven Brennkraftmaschinen-Klopfregelung bekannt, bei dem laufend oder in bestimmten Zeitabständen jeweils aktuelle Zündwinkel-Spätverstellwerte in ein Adaptionskennfeld geschrieben werden. Bei einer starken Änderung der Umgebungsbedingungen, beispielsweise bei einer Verwendung eines weniger klopffesten Kraftstoffs, erfolgt eine Anpassung des Adaptionskennfeldwertes langsam in Abhängigkeit von den auftretenden Klopfsignalen und es muss zur Anpassung des gesamten Adaptionskennfelds jeder Kennfeldbereich mindestens einmal angefahren werden.

Aus der DE 41 09 433 A ist bereits eine adaptive Klopfregelung bekannt, bei der Kennfelder für die einzelnen Zylinder verwendet werden.

Aus der WO 97/30286 A ist ebenfalls eine adaptive Klopfregelung bekannt, die sich an eine veränderte Kraftstoffqualität anpasst.

Aus der DE 40 08 170 A1 ist ein Verfahren zur adaptiven Klopfregelung einer Brennkraftmaschine bekannt, wobei die aktuellen Zündwinkel-Spätverstellungswerte in einem Adaptionskennfeld gespeichert werden. Das Adaptionskennfeld weist in Abhängigkeit von mindestens einem Betriebsparameter der Brennkraftmaschine unterteilte Bereiche auf, wobei stets ein Wert einer Zündwinkel-Spätverstellung während des Betriebs im zugehörigen Bereich gespeichert wird. Beim Wechsel in einen anderen Betriebsparameterbereich bildet der für diesen Betriebsparameterbereich gespeicherte Zündwinkel-Verstellwert den neuen Zündwinkel-Spätverstellwert, der Ausgangspunkt für die Klopfregelung ist. Im jeweiligen Betriebsparameterbereich erfolgt die Anpassung des Kennfeldwerts entsprechend dem Signal der Klopfregelung, wobei beim Klopfen eine Spätverstellung des Zündwinkels durchgeführt wird. Tritt über einen bestimmten Zeitraum kein Klopfen auf, wird der Zündwinkel in Richtung Früh zurückgeführt.

Vorteile der Erfindung

Das erfindungsgemäße Verfahren zur Anpassung eines Adaptionskennfelds einer adaptiven Brennkraftmaschinen-Klopfregelung hat gegenüber dem Bekannten den Vorteil, dass bei einer starken Änderung der Umgebungsbedingungen eine sofortige Anpassung des Zündwinkel-Spätverstellwerts erfolgt, ohne dass unnötiges Klopfen aufgetreten ist. Als weiterer Vorteil ist anzusehen, dass das gesamte Adaptionskennfeld an die geänderten Umgebungsbedingungen angepasst wird, was ebenfalls zu einer Vermeidung von unnötigem Klopfen führt und auch bei einem Wechsel in einen neuen Betriebsparameterbereich die neuen Umgebungsbedingungen bereits berücksichtigt sind. Durch die in den Unteransprüchen aufgeführten Maßnahmen ist eine vorteilhafte Weiterbildung und Verbesserung des im unabhängigen Anspruch angegebenen Verfahrens zur Anpassung eines Adaptionskennfelds möglich. Besonders vorteilhaft ist, dass eine Änderung der Umgebungsbedingungen festgestellt wird dadurch, dass der aktuell benötigte Zündwinkel-Spätverstellwert sich von einem dem jeweiligen Betriebsparameterbereich entsprechendem Referenzwinkel deutlich unterscheidet. Eine Feststellung einer derartigen Änderung der Umgebungsbedingungen ist somit einfach und mit wenig Aufwand feststellbar. Vorteilhaft ist dabei, einen Referenzwert aus den aktuellen Adaptionskennfeldwerten zu bilden. Weiterhin ist vorteilhaft, bei Feststellen einer Änderung der Umgebungsbedingungen einen Faktor zu ermitteln, der beschreibt, in welchem Bereich zwischen schlechtestmöglichem Adaptionskennfeldwert und bestmöglichem Adaptionskennfeldwert der aktuelle Zündwinkel-Spätverstellwert liegt, so dass dann Adaptionskennfeldwerte für jeden Betriebsparameterbereich entsprechend des Faktors angepasst werden können. Es ist somit eine einfache und wenig aufwendige Anpassung des gesamten Adaptionskennfelds möglich. Besonders einfach ist die Ermittlung des Faktors, wenn zwischen bestmöglichem Kennfeldwert und schlechtestmöglichem Kennfeldwert eine Gerade interpoliert wird. Es ist ebenso vorteilhaft, die Änderung von Umgebungsbedingungen anhand von Sensorwerten festzustellen, da so eine objektivere Beurteilung der Umgebungsbedingungen möglich ist. Insbesondere beeinflussen die Umgebungstemperatur oder die Kraftstoffqualität die Klopfhäufigkeit, deshalb ist es vorteilhaft, diese Bedingungen mittels Sensoren zu erfassen. Bei einer Erfassung der Umgebungsbedingungen durch Sensoren ist es ebenfalls vorteilhaft, die neuen Umgebungsbedingungen in Bezug auf best- und schlechtestmögliche Umgebungsbedingungen anhand eines Faktors zu charakterisieren und das an die neuen Umgebungsbedingungen angepasste Adaptionskennfeld anhand des Faktors zu ermitteln. Somit ist wiederum eine Anpassung des gesamten Adaptionskennfelds auf einfache Art und Weise möglich. Weiterhin ist vorteilhaft, das Adaptionskennfeld zylinderindividuell zu gestalten und somit die Anpassung des Adaptionskennfelds ebenfalls zylinderindividuell vorzunehmen.

Zeichnungen

Ausführungsbeispiele der Erfindung sind in Zeichnungen dargestellt und in der nachfolgenden Beschreibung näher erläutert. Es zeigen

Figur 1 schematisch ein erfindungsgemäßes Verfahren zur Anpassung eines Adaptionskennfelds einer adaptiven Brennkraftmaschinen-Klopfregelung,
Figur 2 schematisch ein Adaptionskennfeld,

Figur 3 schematisch ein erstes und ein zweites Grenzkennfeld und

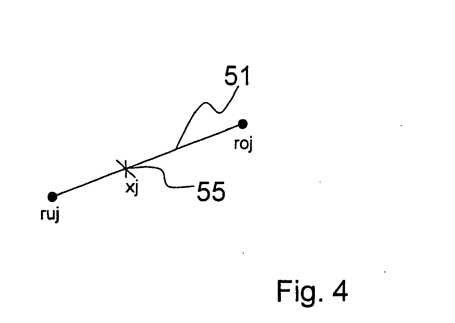

Figur 4 schematisch die Ermittlung eines Referenzfaktors.

Beschreibung der Ausführungsbeispiele

Beim Betrieb einer Brennkraftmaschine stellt das sogenannte Klopfen einen kritischen Betriebszustand dar, der die Lebensdauer ungünstig beeinflussen kann. Bekannt ist eine sogenannte Klopfregelung, die beim Feststellen des Klopfens eines Zylinders der Brennkraftmaschine den Zündwinkel in Richtung Spät verschiebt. Hierdurch lässt sich der Klopfzustand beseitigen. Tritt nach Ablauf einer bestimmten Zeit kein Klopfen auf, so erfolgt eine Rückführung des Zündwinkels in Richtung Früh. Um beim Wechsel von Betriebsparameterbereichen besonders schnell einen Zündwinkel-Spätverstellwert vorliegen zu haben, bei dem kein Klopfen auftritt, wird im Speicher eines Steuergeräts ein sogenanntes Adaptionskennfeld bereitgestellt. Dies ist in der DE 40 08 170 ausführlich beschrieben. Dieses Adaptionskennfeld, das von mindestens einem Betriebsparameter aufgespannt wird, ist in bestimmte, fest vorgegebene Bereiche unterteilt. Für jeden Bereich enthält der Speicher einen Zündwinkel-Spätverstellwert, der den jeweiligen beim Verlassen des Betriebsparameterbereichs eingestellten Zündwinkel-Spätverstellwert speichert. Bei einem erneuten Wechsel in den jeweiligen Betriebsparameterbereich wird der dort gespeicherte Zündwinkel-Spätverstellwert eingestellt und als Ausgangspunkt für eine Klopfregelung benutzt. Somit lassen sich bei einem Wechsel der Betriebsparameterbereiche sehr schnell die für die Klopfregelung optimalen Zündwinkelspätverstellwerte einstellen. Betriebsparameter sind in diesem Zusammenhang insbesondere die Last bzw. die Drehzahl.

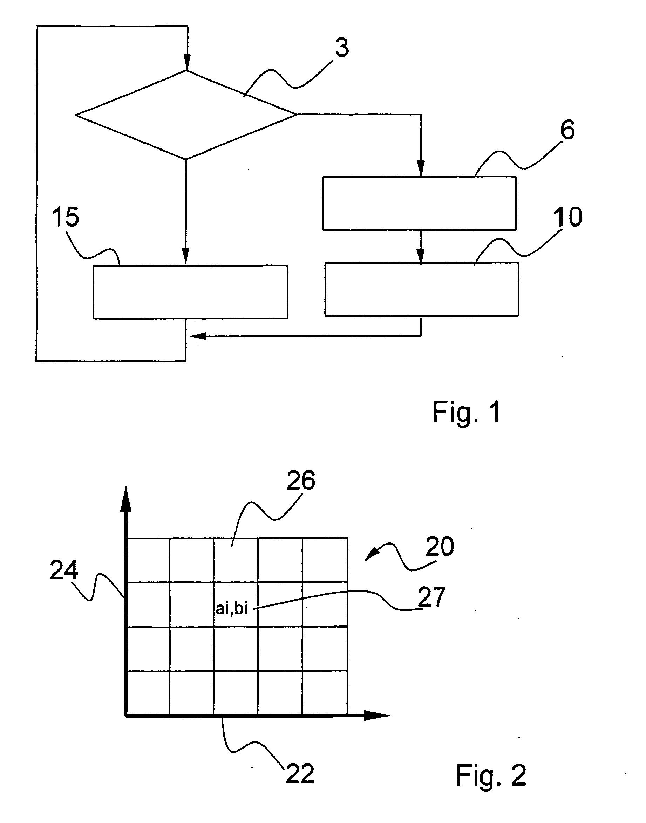

Zündwinkelspätverstellwerte sind nicht nur von Betriebsparametern abhängig, sondern auch von Umgebungsbedingungen, insbesondere von der Qualität des Kraftstoffs, d.h. der Klopffestigkeit des Kraftstoffs, und der Umgebungstemperatur. Bei einer Änderung der Umgebungsbedingungen, z.B. bei der Verwendung eines anderen Kraftstoffs, wird der Zündwinkel-Spätverstellwert zum Teil signifikant beeinflußt. Um dieser Abhängigkeit Rechnung zu tragen, wurde nun in der vorliegenden Erfindung jeder, in einem Adaptionskennfeld enthaltene Zündwinkel-Spätverstellwert als Summe aus einem Vorsteueranteil bi und einem Restanteil ai ausgedrückt. Der Vorsteueranteil beinhaltet dabei den Anteil des Zündwinkel-Spätverstellwerts, der von Umgebungsbedingungen abhängt, und der Restanteil ai den Anteil des Zündwinkel-Spätverstellwerts, der unmittelbar durch die Klopfregelung beeinflußt wird. In Figur 2 ist ein derartiges Adaptionskennfeld schematisch dargestellt. Das in Figur 2 dargestellte Adaptionskennfeld ist beispielhaft für zwei Betriebsparameter dargestellt, beispielsweise die Last oder die Drehzahl, wobei ein derartiges Kennfeld aber auch von einem oder mehr als zwei Betriebsparametern aufgespannt werden kann. Auf der Achse 22 sind Werte eines ersten Betriebsparameters, beispielsweise die Last, aufgetragen. Auf der Achse 24 sind Werte eines zweiten Betriebsparameters, beispielsweise die Drehzahl, aufgetragen. Werden jetzt die Werte der Achse des ersten Betriebsparameters 22 und des zweiten Betriebsparameters 24 in einzelne Bereiche unterteilt, dann entsteht wie in Figur 2 dargestellt eine Matrix von Betriebsparameterbereichen 26. Die Gesamtheit aller Betriebsparameterbereiche 26 spannt das Adaptionskennfeld 20 auf. Einem jeden derartigen Betriebsparameterbereich wird nun ein Restanteil ai und ein Vorsteueranteil bi zugeordnet, wie dies in dem Betriebsparameterbereich 27 beispielhaft dargestellt ist. Somit weist das Adaptionskennfeld 20 einer der Anzahl der Betriebsparameterbereiche entsprechenden Anzahl von Vorsteueranteilswerte bi und eine eben solche Anzahl von Restanteilswerten ai. Insgesamt beinhaltet das Adaptionskennfeld also doppelt so viele Werte wie es Betriebsparameterbereiche aufweist. Dabei ergibt sich der Zündwinkel-Spätverstellwert aus der Summe des Restanteils ai und des Vorsteueranteils bi für jeden Betriebsparameterbereich.

Das erfindungsgemäße Verfahren zur Anpassung des Adaptionskennfelds einer adaptiven Brenkraftmaschinen-Klopfregelung ist schematisch in Figur 1 dargestellt. Dabei wird in Schritt 3 festgestellt, ob sich die Umgebungsbedingungen geändert haben. Ist dies der Fall, so wird das Verfahren mit Schritt 6 weitergeführt, wobei in Schritt 6 ein Kriterium ermittelt wird, anhand dessen in dem darauffolgenden Schritt 10 ein neuer Vorsteueranteil bi für jeden Betriebsparameterbereich 26 des Adaptionskennfelds 20 ermittelt wird. Anschließend wird das Verfahren wieder mit Schritt 3 fortgesetzt. Hat die Feststellung in Schritt 3 ergeben, dass sich die Umgebungsbedingungen nicht geändert haben, so wird in Schritt 15 der Vorsteueranteilswert bi eines jeden Betriebsparameterbereichs 26 des Adaptionskennfelds 20 unverändert beibehalten. Nach Schritt 15 wird auch hier das Verfahren wieder mit Schritt 3 fortgesetzt. Die Fortsetzung des Verfahrens mit Schritt 3 wird im Allgemeinen in bestimmten Zeitabständen durchgeführt. Durch das anhand von Figur 1 dargestellte Verfahren wird sichergestellt, dass das Adaptionskennfeld 20 für jeden Betriebsparameterbereich 26 sehr schnell an die geänderten Umgebungsbedingungen angepasst wird. Dies ist vorteilhaft, da so unnötige Klopfer vermieden werden und somit einer Zerstörung der Brennkraftmaschine vorgebeugt wird.

In einem bevorzugten Ausführungsbeispiel wird die Bestimmung, ob sich die Umgebungsbedingungen geändert haben, anhand des von der Klopfregelung bestimmten aktuellen Zündwinkel-Spätverstellwerts bestimmt. Dabei wird der aktuelle, von der Klopfregelung ermittelte Zündwinkel-Spätverstellwert mit einem Referenzwert, der den aktuellen Betriebsparametern zugeordnet ist, verglichen und bestimmt, ob ein erster Schwellwert überschritten ist. Wenn ein erster Schwellwert überschritten ist, d.h. der aktuelle Zündwinkel-Spätverstellwert stark von dem Referenzwert abweicht, wird geschlußfolgert, dass sich die Umgebungsbedingungen stark geändert haben, d.h. das Verfahren wird mit Schritt 6 fortgesetzt. Wird der erste Schwellwert nicht überschritten, dann wird geschlußfolgert, dass sich die Umgebungsbedingungen nicht oder nur sehr minimal geändert haben, d.h. das Verfahren wird mit Schritt 15 fortgesetzt. Ein derartiger Referenzwert wird in einem bevorzugten Ausführungsbeispiel durch den jeweiligen für den entsprechenden Betriebsparameterbereich vorhandenen Adaptionskennfeldwert, der sich aus der Summe von Restanteil ai und Vorsteueranteil bi ergibt, dargestellt. In einem anderen bevorzugten Ausführungsbeispiel wird ein solcher Referenzwert in einem Masterbereich dadurch ermittelt, dass beispielsweise mehrere nebeneinanderliegende Betriebsparameterbereiche zusammen einen Masterbereich bilden, und dass ein Mittelwert der Adaptionskennfeldwerte als Referenzwert aus diesen zu dem Masterbereich gehörenden Betriebsparameterbereichen gebildet wird. Der Adaptionskennfeldwert jedes Betriebsparameterbereichs ergibt sich dabei wiederum aus dem jeweiligen Restanteil ai und dem jeweiligen Vorsteueranteil bi. Ein derartiger Mittelwert kann dabei beispielsweise das arithmetische Mittel der Adaptionskennfeldwerte sein.

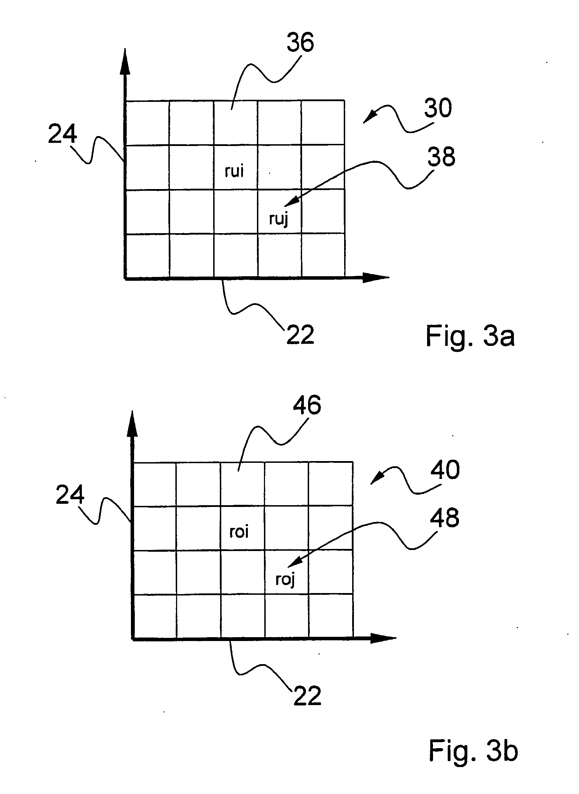

In einem bevorzugten Ausführungsbeispiel der Erfindung existieren in einem Speicher eines Steuergeräts weitere zwei Kennfelder, die von mindestens einem Betriebsparameter aufgespannt werden, die Grenzkennfeldwerte der Zündwinkelspätverstellungen für die schlechtestmögliche Kombination von Umgebungsbedingungen und für die bestmögliche Kombination von Umgebungsbedingungen enthalten. Zwei derartige Kennfelder sind in Figur 3 dargestellt. Auf der Achse 22 ist wiederum jeweils ein erster Betriebsparameter und auf der Achse 24 ist wiederum jeweils ein zweiter Betriebsparameter aufgetragen. Falls, wie oben erläutert, das Adaptionskennfeld 20 von einem oder mehr als zwei Betriebsparametern aufgespannt wird, dann werden die Grenzkennfelder für die best- und schlechtestmögliche Kombination von Umgebungsbedingungen entsprechend auch von einem oder mehr als zwei Betriebsparametern aufgespannt. Wiederum sind beide Betriebsparameter in einzelne Bereiche unterteilt, so dass eine Matrix von Bereichen entsteht, wobei jedem sogenannten Masterbereich ein Grenzkennfeldwert zugeordnet ist. In Figur 3a ist ein erstes Grenzkennfeld 30 dargestellt, das Masterbereiche 36 aufweist, wobei jedem Masterbereich 36 ein Grenzkennfeldwert bui zugeordnet ist. Das erste Grenzkennfeld beinhaltet die Grenzkennfeldwerte der Zündwinkelspätverstellung für die schlechtestmöglichen Umgebungsbedingungen. In Figur 3b ist ein zweites Grenzkennfeld 40 dargestellt, das Masterbereiche 46 aufweist, wobei jedem Masterbereich ein Grenzkennfeldwert boi zugeordnet ist. Das zweite Grenzkennfeld 40 beinhaltet die Grenzkennfeldwerte der Zündwinkelspätverstellung für die bestmöglichen Umgebungsbedingungen. Die Masterbereiche 36 und 46 des ersten bzw. zweiten Grenzkennfelds entsprechen den Betriebsparameterbereichen 26 des Adaptionskennfelds 20. In einem weiteren Ausführungsbeispiel können die Masterbereiche 36 und 46 des ersten bzw. zweiten Grenzkennfelds auch aus mehreren Betriebsparameterbereichen 26 gebildet werden.

Um nun den Vorsteueranteil entsprechend den veränderten Umgebungsbedingungen für jeden Betriebsparameterbereich 26 zu ermitteln, wird, wie in Figur 5 dargestellt, ein erster Faktor z ermittelt, der beschreibt, wo der aktuelle Zündwinkel-Spätverstellwert xj 55 zwischen dem ersten Grenzkennfeldwert ruj und dem zweiten Grenzkennfeldwert roj liegt. Dabei werden die Grenzkennfeldwerte ruj bzw. roj dem Masterbereich 38 bzw. 48 des ersten bzw. zweiten Grenzkennfeldes entnommen, der die Werte der Betriebsparameter enthält, die den aktuellen Werten der Betriebsparametern des aktuellen Zündwinkel-Spätverstellwerts entsprechen. Vorzugsweise werden die Grenzkennfeldwerte ruj und roj des ersten Grenzkennfelds 30 und des zweiten Grenzkennfelds 40 mittels einer Geraden verbunden und der erste Faktor z wird nach folgender Formel ermittelt:

$$z = \frac{xj - ruj}{roj - ruj}$$

In anderen Ausführungsbeispielen werden die Grenzkennfeldwerte ruj und roj des ersten Grenzkennfelds 30 und des zweiten Grenzkennfelds 40 mittels anderer Kurven verbunden, wobei dann die Ermittlung des ersten Faktors z entsprechend der verwendeten Kurve vorgenommen wird.

In dem bevorzugten Ausführungsbeispiel wird nun der Vorsteueranteil für jeden Betriebsparameterbereich 26 derart ermittelt, dass für jeden Betriebsparameterbereich 26 der entsprechende erste Grenzkennfeldwert und der mit dem Faktor z multiplizierte Abstand zwischen erstem und zweitem Grenzkennfeldwert (roi - rui) addiert und ein erster Zwischenwert für jeden Betriebsparameterbereich 26 ermittelt wird. In einem weiteren Ausführungsbeispiel werden für jeden Betriebsparameterbereich 26 von dem entsprechenden zweiten Grenzkennfeldwert der mit dem Faktor z multiplizierte Abstand zwischen erstem und zweitem Grenzkennfeldwert (roi - rui) subtrahiert und so ein zweiter Zwischenwert für jeden Betriebsparameterbereich 26 ermittelt. Von dem ersten bzw. zweiten Zwischenwert für jeden Betriebsparameterbereich 26 wird dann noch in einem bevorzugten Ausführungsbeispiel der zum jeweiligen Betriebsparameterbereich gespeicherte Restanteil ai subtrahiert.

In einem weiteren bevorzugten Ausführungsbeispiel wird anhand von Sensoren ermittelt, ob sich die Umgebungsbedingungen geändert haben. Dabei wird z.B. durch einen Temperatursensor die Umgebungstemperatur gemessen und an das Steuergerät übermittelt. Alternativ oder zusätzlich wird durch einen weiteren Sensor die Kraftstoffqualität, beispielsweise die Klopffestigkeit festgestellt und ebenfalls an das Steuergerät weitergegeben. Überschreitet die Änderung der Umgebungsbedingungen einen zweiten Schwellwert, wobei dies in Schritt 3 festgestellt wird, dann wird das Verfahren mit Schritt 6 fortgesetzt. Die ermittelten Umgebungsbedingungen werden mit best- bzw. schlechtestmöglichen Umgebungsbedingungen verglichen und es wird ein zweiter Faktor f ermittelt, der beschreibt, wo die Umgebungsbedingungen, die zu dem jeweiligen Zeitpunkt vorliegen, zwischen den best- und schlechtestmöglichen Umgebungsbedingungen liegen. Danach kann das Verfahren wie oben beschrieben fortgesetzt werden und für jeden Betriebsparameterbereich 26 ein neuer Vorsteueranteil bi bestimmt werden. Dabei wird anstatt des ersten Faktors z der zweite Faktor f verwendet.

In einem weiteren bevorzugten Ausführungsbeispiel, beispielsweise bei einer zylinderindividuellen Klopfregelung, wird im Speicher des Steuergeräts für jeden Zylinder oder für jede fest vorgegebene Zylindergruppe ein Adaptionskennfeld bereitgestellt. Dabei weist jedes Adaptionskennfeld jeweils der der Anzahl von Betriebsparameterbereichen entsprechenden Anzahl von Vorsteueranteilswerten ai und Restanteilswerten bi auf. Dies kann auch dadurch realisiert werden, dass im Speicher des Steuergeräts ein Adaptionskennfeld bereitgestellt wird, das zu jedem Betriebsparameterbereich für jeden Zylinder oder jede Zylindergruppe je ein Vorsteueranteilswert ai und je ein Restanteilswert bi enthält. Bei der Bestimmung, ob sich die Umgebungsbedingungen geändert haben, wird dann der Mittelwert aller aktuellen Zündwinkel-Spätverstellwerte der Zylinder bzw. Zylindergruppen mit einem Referenzwert, der den aktuellen Betriebsparametern zugeordnet ist, verglichen. Ein derartiger Referenzwert kann der Adaptionskennfeldwert für den jeweiligen Zylinder bzw. für die jeweilige Zylindergruppe im aktuellen Betriebsparameterbereich oder Masterbereich sein. Wird mittels des oben beschriebenen Schwellwertvergleichs erkannt, dass sich die Umgebungsbedingungen geändert haben, dann wird der Vorsteueranteil für jeden Zylinder bzw. jede Zylindergruppe nach dem oben beschriebenen Verfahren den neuen Umgebungsbedingungen angepasst.

Nach einer Änderung der Umgebungsbedingungen ergibt sich damit der aus dem Adaptionskennfeld 20 gelesene Adaptionskennfeldwert aus der Summe des Restanteils bi und des nun neu bestimmten Vorsteueranteils ai. Für jeden Betriebsparameterbereich wurde eine Anpassung des Vorsteueranteils ai vorgenommen, so dass auch bei einem Wechsel in einen neuen Betriebsparameterbereich 26 ein Adaptionskennfeldwert vorliegt, der den neuen Umgebungsbedingungen angepasst ist.

**Patentansprüche**

1. Verfahren zur Anpassung eines Adaptionskennfelds einer adaptiven Brennkraftmaschinen-Klopfregelung, wobei das Adaptionskennfeld (20) von mindestens einem Betriebsparameter (22,24) aufgespannt wird, wobei sich das Adaptionskennfeld (20) für jeden Betriebsparameterbereich (26) aus einem Vorsteueranteil (bi), der die Umgebungsbedingungen charakterisiert, und aus einem Restanteil (ai), der aus der Klopfregelung resultiert, zusammensetzt, wobei sich der Wert des Adaptionskennfelds für jeden Betriebsparameterbereich aus der Summe des dem jeweiligen Betriebsparameterbereich entsprechenden Vorsteueranteils (bi) und des jeweiligen Betriebsparameterbereich entsprechenden Restanteils (ai) ergibt, mit folgenden Schritten:

   a) Feststellen, ob einer Änderung von Umgebungsbedingungen stattgefunden hat,
   b) Ermittlung eines neuen Vorsteueranteils (bi) abhängig von den geänderten Umgebungsbedingungen für jeden Betriebsparameterbereich, falls eine Änderung von Umgebungsbedingungen stattgefunden hat, oder Konstanthalten des Vorsteueranteils (bi) für jeden Betriebsparameterbereich, falls keine Änderung von Umgebungsbedingungen stattgefunden hat.

2. Verfahren nach Anspruch 1 **dadurch gekennzeichnet, dass** für jeden Zylinder bzw. jede Zylindergruppe ein Vorsteueranteil (bi) und ein Restanteil (ai) vorgesehen ist und dass bei der Feststellung, dass eine Änderung von Umgebungsbedingungen stattgefunden hat, der Vorsteueranteil (bi) für jeden Zylinder bzw. jede Zylindergruppe für jeden Betriebsparameterbereich neu ermittelt wird.

3. Verfahren nach Anspruch 1 **dadurch gekennzeichnet, dass** das Feststellen, dass sich die Umgebungsbedingungen geändert haben, **dadurch** erfolgt, dass die Differenz zwischen einem aktuell benötigten Zündwinkel-Spätverstellwert und einem dem Adaptionskennfeld entnommenen Referenzwert einen bestimmten, fest vorgegebenen ersten Schwellwert überschreitet.

4. Verfahren nach Anspruch 3 **dadurch gekennzeichnet, dass** der dem Adaptionskennfeld entnommene Referenzwert als Mittelwert aus einem den aktuellen Betriebsparametern entsprechenden Masterbereich des Adaptionskennfelds gebildet wird.

5. Verfahren nach Anspruch 3 **dadurch gekennzeichnet, dass** der dem Adaptionskennfeld entnommene Referenzwert dem Adaptionskennfeldwert für die aktuellen Betriebsparameter entspricht.

6. Verfahren nach Anspruch 3 **dadurch gekennzeichnet, dass** zwischen einem in der Speichereinheit enthaltenen ersten Grenzkennfeldwert (ruj), wobei das erste Grenzkennfeld ein Kennfeld der Zündwinkelspätverstellwerte für die schlechtestmöglichen Umgebungsbedingungen darstellt, und einem in der Speichereinheit enthaltenen zweiten Grenzkennfeldwert (roj), wobei das zweite Grenzkennfeld ein Kennfeld der Zündwinkelspätverstellwerte für die bestmöglichen Umgebungsbedingungen darstellt, in dem den aktuellen Betriebsparametern entsprechenden Masterbereich interpoliert wird, ein erster Referenzfaktor (z) entsprechend der Lage des aktuellen benötigten Zündwinkel-Spätverstellwerts (xj) zwischen dem den aktuellen Betriebsparametern entsprechenden ersten Grenzkennfeldwert (ruj) bzw. zwischen dem den aktuellen Betriebsparametern entsprechenden zweiten Grenzkennfeldwert (roj) auf einer den ersten und zweiten Grenzkennfeldwert verbindende Interpolationskurve (51) ermittelt wird.

7. Verfahren nach Anspruch 6 **dadurch gekennzeichnet, dass** die Interpolationskurve (51) zwischen dem ersten und dem zweiten Grenzkennfeldwert (ruj,roj) für den jeweiligen Betriebsparameterbereich eine Gerade ist.

8. Verfahren nach Anspruch 1 **dadurch gekennzeichnet, dass** mittels einer Überschreitung von mindestens einer Sensormesswertänderung mindestens eines Sensors eines zweiten, fest vorgegebenen Schwellwerts festgestellt wird, dass eine Änderung der Umgebungsbedingungen stattgefunden hat, wobei der mindestens eine Sensor Umgebungsbedingungen misst.

9. Verfahren nach Anspruch 8 **dadurch gekennzeichnet, dass** die von dem mindestens einem Sensor gemessene Umgebungsbedingungen die Umgebungstemperatur oder die Kraftstoffqualität darstellt.

10. Verfahren nach Anspruch 8 **dadurch gekennzeichnet, dass** die aktuellen Umgebungsbedingungen mit den bestmöglichen und den schlechtestmöglichen Umgebungsbedingungen verglichen werden und dass je nach Abweichung der aktuellen Umgebungsbedingungen von den schlechtestmöglichen bzw. bestmöglichen Umgebungsbedingungen ein zweiter Referenzfaktor (f) ermittelt wird.

11. Verfahren nach einem der Ansprüche 6 oder 10 **dadurch gekennzeichnet, dass** der neue Vorsteueranteil für jeden Betriebsparameterbereich derart ermittelt wird, dass zum ersten bzw. zweiten Grenzkennfeldwert (ruj bzw. roj) für jeden Betriebsparameterbereich der mit dem ermittelten ersten oder zweiten Referenzfaktor (z oder f) multiplizierte Differenz (roj-ruj) addiert bzw. subtrahiert wird, wobei anschließend für jeden Betriebsparameterbereich der jeweilige Wert des Restanteils subtrahiert wird.

**Claims**

1. Method for adapting an adaptation characteristic diagram of an adaptive internal combustion engine knocking controller, the adaptation characteristic diagram (20) being set up for at least one operating parameter (22, 24), with the adaptation characteristic diagram (20) being composed, for each operating parameter range (26), of a pilot control component (bi) which characterizes the ambient conditions, and of a residual component (ai) which results from the knocking control, with the value of the adaptation characteristic diagram for each operating parameter range resulting from the sum of the pilot control component (bi) which corresponds to the respective operating parameter range, and of the residual component (ai) which corresponds to the respective operating parameter range, having the following steps:

   a) determining whether a change in the ambient conditions has taken place,
   b) requiring a new pilot control component (bi) as a function of the changed ambient conditions for each operating parameter range if a change in ambient conditions has taken place, or keeping the pilot control component (bi) constant for each operating parameter range if there has been no change in ambient conditions.

2. Method according to Claim 1, **characterized in that** a pilot control component (bi) and a residual component (ai) is provided for each cylinder or each cylinder group, respectively, and **in that** when it is determined that a change in ambient conditions has taken place, the pilot control component (bi) is determined again for each cylinder or each cylinder group for each operating parameter range.

3. Method according to Claim 1, **characterized in that** the determination of the change in ambient conditions is carried out by virtue of the fact that the difference between a currently required ignition-angle retarded-direction adjustment value and a reference value which is obtained from the adaptation characteristic diagram exceeds a specific, permanently predefined first threshold value.

4. Method according to Claim 3, **characterized in that** the reference value which is obtained from the adaptation characteristic diagram is formed as a mean value from a master range, corresponding to the current operating parameters, of the adaptation characteristic diagram.

5. Method according to Claim 3, **characterized in that** the reference value which is obtained from the adaptation characteristic diagram corresponds to the adaptation characteristic diagram value for the cur-

**6.** Method according to Claim 3, **characterized in that** the interpolation is carried out between a first limiting characteristic diagram value (ruj) contained in the memory unit, with the first limiting characteristic diagram constituting a characteristic diagram of the ignition-angle retarded-direction adjustment values for the worst possible ambient conditions, and a second limiting characteristic diagram value (roj) contained in the memory unit, with the second limiting characteristic diagram constituting a characteristic diagram of the ignition-angle retarded-direction adjustment values for the best possible ambient conditions, in the master range corresponding to the current operating parameters, and a first reference factor (z) corresponding to the position of the current required ignition-angle retarded-direction adjustment value (xj) between the first limiting characteristic diagram value (ruj) corresponding to the current operating parameters, or between the second limiting characteristic diagram value (roj) corresponding to the current operating parameters, is determined on an interpolation curve (51) connecting the first and second limiting characteristic diagram values.

**7.** Method according to Claim 6, **characterized in that** the interpolation curve (51) between the first and second limiting characteristic diagram values (ruj, roj) for the respective operating parameter range is a straight line.

**8.** Method according to Claim 1, **characterized in that** by at least one sensor measured value change of at least one sensor for a second, permanently predefined threshold value being exceeded it is detected that a change in the ambient conditions has taken place, with the at least one sensor measuring ambient conditions.

**9.** Method according to Claim 8, **characterized in that** the ambient conditions which are measured by the at least one sensor are the ambient temperature or the fuel quality.

**10.** Method according to Claim 8, **characterized in that** the current ambient conditions are compared with the best possible and the worst possible ambient conditions, and **in that** a second reference factor (f) is determined in accordance with the deviation of the current ambient conditions from the worst possible and best possible ambient conditions, respectively.

**11.** Method according to one of Claims 6 and 10, **characterized in that** the new pilot control component for each operating parameter range is determined in such a way that the difference (roj-ruj) which is multiplied by the acquired first or second reference factor (z or f) for each operating parameter range is added to or subtracted from the first or second limiting characteristic diagram value (ruj or roj), with the respective value of the residual component being subsequently subtracted for each operating parameter range.

**Revendications**

**1.** Procédé d'ajustement d'un champ caractéristique d'adaptation d'une régulation adaptative du cognement de moteurs à combustion interne, le champ caractéristique d'adaptation (20) étant formé par au moins un paramètre de fonctionnement (22, 24), et constitué, pour chaque plage de paramètre de fonctionnement (26), d'une partie pilote (bi) caractérisant les conditions environnantes et d'une partie résiduelle (ai) résultant de la régulation du cognement, la valeur du champ caractéristique d'adaptation étant obtenue, pour chaque plage de paramètre de fonctionnement, à partir de la somme de la partie pilote (bi) correspondant à la plage de paramètre de fonctionnement respective et de la partie résiduelle (ai) correspondant à la plage de paramètre de fonctionnement respective,
et comprenant les étapes consistant à :

    a) établir si une modification des conditions environnantes s'est produite, et
    b) déterminer une nouvelle partie pilote (bi) en fonction des conditions environnantes modifiées pour chaque plage de paramètre de fonctionnement, dans le cas où une modification des conditions environnantes a eu lieu, ou maintenir constante la partie pilote (bi) pour chaque plage de paramètre de fonctionnement dans le cas où aucune modification des conditions environnantes n'a eu lieu.

**2.** Procédé selon la revendication 1,
**caractérisé en ce que**
pour chaque cylindre ou chaque groupe de cylindres, il est prévu une partie pilote (bi) et une partie résiduelle (ai), et
lorsque l'on détermine qu'une modification des conditions environnantes a eu lieu, la partie pilote (bi) pour chaque cylindre ou chaque groupe de cylindres est une nouvelle fois déterminée pour chaque plage de paramètre de fonctionnement.

**3.** Procédé selon la revendication 1,
**caractérisé en ce qu'**
on établit un changement des conditions environnantes lorsque la différence entre une valeur de réglage tardive de l'angle d'allumage effectivement requise et une valeur de référence issue du champ caractéristique d'adaptation dépasse une première valeur de seuil donnée, fixement prédéterminée.

**4.** Procédé selon la revendication 3,
**caractérisé en ce que**
la valeur de référence issue du champ caractéristique d'adaptation est formée en tant que valeur moyenne à partir d'une plage maîtresse du champ caractéristique d'adaptation correspondant aux paramètres de fonctionnement effectifs.

**5.** Procédé selon la revendication 3,
**caractérisé en ce que**
la valeur de référence issue du champ caractéristique d'adaptation correspond à la valeur du champ caractéristique d'adaptation pour les paramètres de fonctionnement effectifs.

**6.** Procédé selon la revendication 3,
**caractérisé en ce qu'**
entre une première valeur de champ caractéristique limite (ruj) obtenue dans l'unité de mémorisation, avec un premier champ caractéristique limite représentant des valeurs de réglage tardives de l'angle d'allumage dans les pires conditions environnantes possibles, et une deuxième valeur de champ caractéristique limite (roj) obtenue dans l'unité de mémorisation avec un deuxième champ caractéristique limite représentant des valeurs de réglage tardives de l'angle d'allumage dans les meilleures conditions environnantes possibles, et dans lequel on interpole la plage maîtresse correspondant aux paramètres de fonctionnement effectifs, on détermine un premier facteur de référence (z) en fonction de la position de la valeur de réglage tardive de l'angle d'allumage effectivement requise (xj) entre la première valeur de champ caractéristique limite correspondant aux paramètres de fonctionnement effectifs (ruj), ou entre la deuxième valeur de champ caractéristique limite correspondant aux paramètres de fonctionnement effectifs (roj), sur une courbe d'interpolation (51) reliant les première et deuxième valeurs de champ caractéristique limite.

**7.** Procédé selon la revendication 6,
**caractérisé en ce que**
la courbe d'interpolation (51) est une droite entre la première et la deuxième valeur de champ caractéristique limite (ruj, roj) pour la plage de paramètre de fonctionnement respective.

**8.** Procédé selon la revendication 1,
**caractérisé en ce que**
lorsqu'au moins une modification de valeur de mesure de capteur d'au moins un capteur dépasse une deuxième valeur de seuil prédéterminée fixement, on établit qu'une modification des conditions environnantes a eu lieu, l'au moins un capteur mesurant les conditions environnantes.

**9.** Procédé selon la revendication 8,
**caractérisé en ce que**
les conditions environnantes mesurées par l'au moins un capteur représentent la température ambiante ou la qualité du carburant.

**10.** Procédé selon la revendication 1,
**caractérisé en ce que**
les conditions environnantes effectives sont comparées avec les meilleures et les pires conditions environnantes possibles, et selon l'écart entre les conditions environnantes effectives et les meilleurs ou les pires conditions environnantes possibles, on détermine un deuxième facteur de référence (f).

**11.** Procédé selon l'une quelconque des revendications 6 ou 10,
**caractérisé en ce que**
la nouvelle partie pilote pour chaque plage de paramètre de fonctionnement est déterminée en ajoutant ou soustrayant, pour chaque plage de paramètre de fonctionnement, la différence (roj-ruj) multipliée par le premier ou le deuxième facteur de référence (z ou f), avec la première ou la deuxième valeur de champ caractéristique limite (ruj ou roj), la valeur respective de la partie résiduelle étant ensuite soustraite pour chaque plage de paramètre de fonctionnement.

Fig. 1

Fig. 2

Fig. 3a

Fig. 3b

Fig. 4